# EUROPEAN PATENT APPLICATION

(11) **EP 2 407 988 A1**
(43) Date of publication of application: **18.01.2012**
(21) Application number: 10007320.4
(22) Date of filing: 15.07.2010
(51) Int. Cl.: H01H 33/53, H02B 13/035, H01H 33/02, H01H 33/66

(54) **Medium voltage circuit-breaker for outdoor use**

(71) Applicant: ABB Technology AG, 8050 Zürich (CH)
(72) Inventor: Gentsch, Dietmar, Dr.-Ing., 40882 Ratingen (DE); Shang, Wenkai, Dr.-Ing., 40878 Ratingen (DE)
(74) Representative: Schmidt, Karl Michael

(57) **Abstract**

Medium voltage circuit-breaker for outdoor applications comprising at least one pole part (3a - 3c) with inner electrical contacts, operated by actuator means via a jackshaft arrangement (6) accommodated in an enclosed main housing (2) having a mounting surface (8), on which the pole part (3a - 3c) is removable attached wherein an elastomeric sealing ring (9) is arranged between the end surface of the pole part (3a - 3c) and the corresponding mounting surface (8) of the main housing (2), wherein at least a section (10) of the sealing ring (9) consists of a solid porosity material, in order to ensure an air exchange between the inside and the environment.

## Description

### Field of the invention

The present invention relates to a medium voltage circuit-breaker for outdoor applications comprising at least one pole part with inner electrical contacts operated by actuator means via a jackshaft arrangement accommodated in an enclosed main housing having a mounting surface, on which the pole part is removable attached.

### Background of the invention

Medium-voltage circuit-breakers interrupt the current by creating and extinguishing the arc in a vacuum chamber. Modern vacuum circuit-breakers tend to have a longer life time than former air or oil circuit-breakers. Vacuum circuit-breakers replaced air circuit-breakers at least for indoor applications. However, the present invention is directed to special circuit-breakers which are suitable for outdoor applications.

The document WO 93/10547 A1 discloses a medium voltage circuit-breaker for indoor and for outdoor use. The circuit breaker has one electrical pole per phase, wherein each pole part includes a feed-through insulator containing a vacuum chamber to which a metal tube is mechanically and electrically connected. The metal tube contains a control rod for operating a movable electrical contact of the pair of electrical contacts which is accommodated inside the vacuum chamber.

Each feed-through insulator of the corresponding pole part is attached to as common main housing containing a jackshaft arrangement for transferring the actuating force generated by an actuator unit to each pole part in order to switch the electrical contacts. The metal tube inside the pole part which usually consists of a synthetic insulating material has an opening on the lower end. This opening is provided for feed the push rod of the jackshaft arrangement through the metal tube in the direction of the pair of electrical contacts.

Since this so-called open system does not avoid an ingress of moisture in the pole part, additional dynamic sealing means are necessary. Therefore, various embodiments of sliding blocks are integrated inside the upper or lower portion inside the metal tube.

The product information "Outdoor life tank vacuum circuit-breaker" (ABB Limited, 2009) discloses another medium voltage circuit breaker arrangement for outdoor applications, but in a sealed system. A closed main housing is provided which is attached to the ground via a supporting frame. The enclosed main housing is made of mild steal for accommodating a spring operated mechanism which is mechanically linked to three pole parts removable attached on an upper mounting surface of the main housing. For accommodating a jackshaft arrangement an additional cross bar-shaped housing part is provided. Each pole part contains an inner vacuum interrupter insert with a pair of electrical contacts as described above and it is attached to the main housing in a sealed manner.

For outdoor applications of embedded pole parts the break down voltage is depended on the temperature and also the relative humility. Furthermore, the weather condition changes in the year and the tracking and dielectric performance of the insulating parts of the circuit-breaker depend on said changing weather conditions.

Therefore, it is an object of the present invention to provide a medium voltage circuit breaker for outdoor application having a constant dielectric performance independent from the weather conditions.

### Summary of the invention

According to the invention a medium voltage circuit-breaker for outdoor applications is provided having an elastomeric sealing ring between the front side of the pole part and the corresponding mounting surface of the enclosed main housing, wherein at least a section of said sealing ring consists of a solid porosity material.

Due to the special porosity material section of the sealing ring a permanent and defined air exchange between the inside and the environment is possible. The specific elastomeric sealing ring ensures constant air conditions around the critical space inside the pole part.

Preferably, the elastomeric sealing ring coaxially surrounds a push rod of the jackshaft arrangement. Thus, the push rod extends through the sealing ring in a constant radial distance.

In order to reach a sufficient electrical insulation between the movable electrical contact of the pole part and its operating means the intermediate push rod consists of a synthetic insulating material, or inorganic porosity material.

In contrast, the special sealing ring according to the present invention is preferably designed as a flexible rubber bellow. A section of said bellow consists of the solid porosity material according to the present invention. Preferably, the porosity solid material is different from the rubber material of the sealing ring in order to ensure the permanent air exchange. However, the porosity solid material preferably consists of a molded synthetic material, e. g. polyethylene foam.

According to another aspect of the invention, the enclosed main housing is preferably made of bended sheet metal in a welded design. In order to ensure a stable construction the sheet metal consists of steel.

For a three-phase application three single pole parts with corresponding elastomeric sealing rings as described above should be attached to the mounting surface of a common enclosed main housing. Due to the common main housing design less single parts are necessary for the outdoor circuit-breaker arrangement.

The foregoing and other aspects of the invention will become apparent following the detailed description of the invention when considered in conjunction with the enclosed drawings.

### Brief description of the drawings

- Figure 1: is a schematic side view of a medium voltage circuit-breaker arrangement for outdoor use, and
- Figure 2: is a schematic axial section around the sealing ring of the circuit breaker of Figure 1.

### Detailed description of the drawings

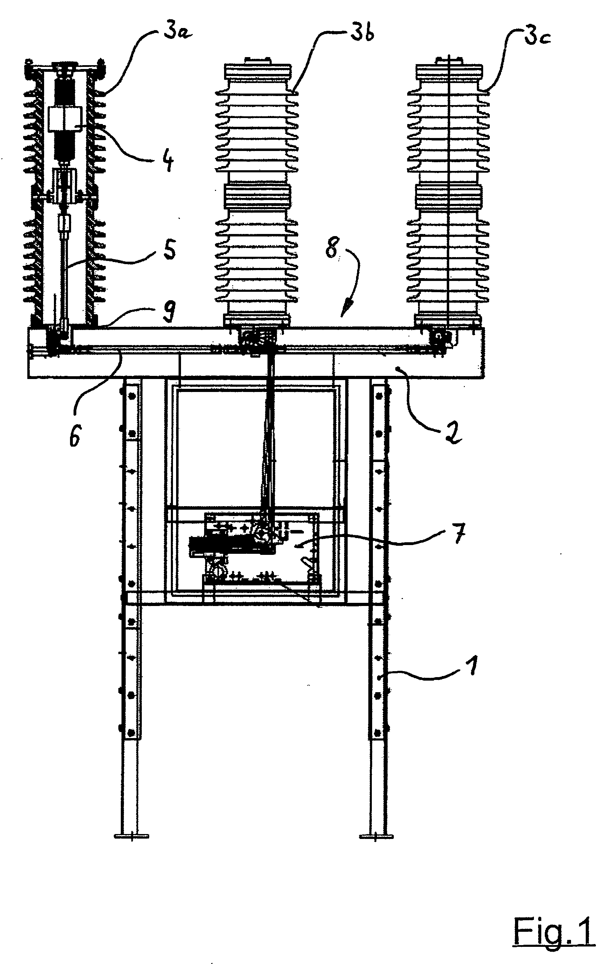

The circuit-breaker arrangement as shown in Figure 1 principally consists of a supporting construction 1, and enclosed main housing 2 and three single pole parts 3a-3c in order to form a three-phase application for outdoor use.

The supporting construction 1 forms a frame for the enclosed main housing 2 in order to hold the circuit-breaker arrangement in place in relation to the ground ensuring a defined distance thereto.

Inside each pole part 3a-3c a vacuum interruption chamber 4 is arranged. The vacuum interruption chamber 4 accommodates a pair of - not shown - electrical contacts under vacuum conditions. One contact of the pair of electrical contacts is axially movable operated by a push rod 5 which is a part of a jackshaft arrangement 6 for mechanically connecting the movable electrical contact of each pole part 3a to 3c with a common electromagnetic actuator 7. The jackshaft arrangement 6 is accommodated in the closed main housing 2 in a sealed manner. Each pole part 3a-3c is removable attached to a mounting surface 8 of the main housing 2.

Between the front side of each pole part 3a to 3c and to the corresponding mounting surface 8 of the main housing a special elastomeric sealing ring 9 is arranged.

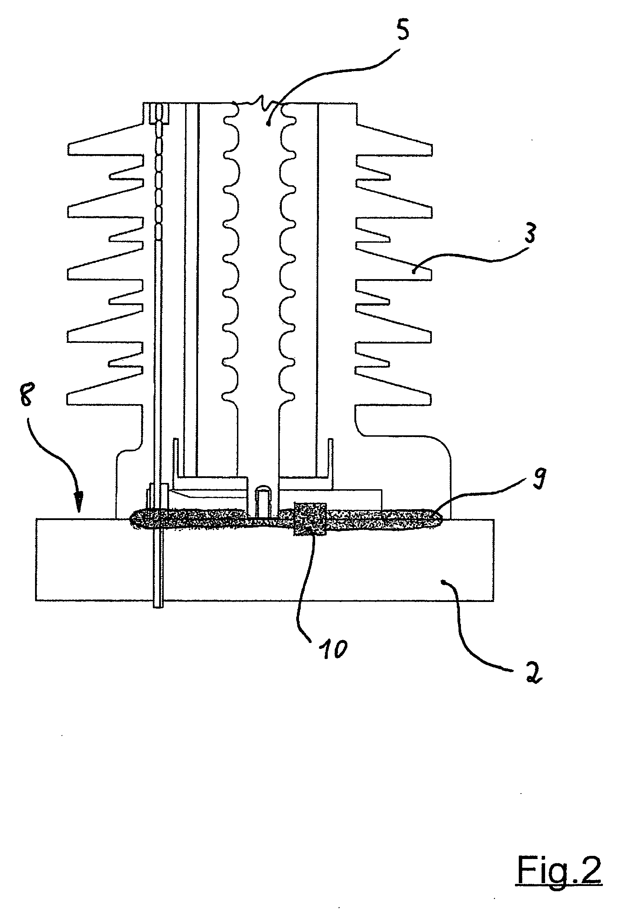

According to Figure 2 the special elastomeric sealing ring 9 comprises a section 10 which consist of a solid porosity material. The solid porosity material ensures an air exchange between the inside of the pole part 3 (exemplary) and the outdoor environment.

As shown, the sealing ring 9 coaxially surrounds the push rod 5 which consists of a synthetic insulation material. The sealing ring 9 consists of elastomeric material and the special section 10 consists of another synthetic material which ensures the desired solid porosity characteristic.

The invention is not limited by the preferred embodiment as described above which is presented as an example only but can be modified in various ways within the scope of protection defined by the following patent claims. Especially, applications with less or more than three pole parts are possible in connection with a common enclosed main housing.

### Reference signs

- 1: supporting construction
- 2: main housing
- 3: pole part
- 4: vacuum interrupt chamber
- 5: push rod
- 6: jackshaft arrangement
- 7: electromagnetic actuator
- 8: mounting surface
- 9: sealing ring
- 10: porosity section

## Claims

1. Medium voltage circuit-breaker for outdoor applications comprising at least one pole part (3a - 3c) with inner electrical contacts, operated by actuator means via a jackshaft arrangement (6) accommodated in an enclosed main housing (2) having a mounting surface (8), on which the pole part (3a - 3c) is removable attached,
**characterized in that** an elastomeric sealing ring (9) is arranged between the end surface of the pole part (3a - 3c) and the corresponding mounting surface (8) of the main housing (2), wherein at least a section (10) of the sealing ring (9) consists of a solid porosity material, in order to ensure an air exchange between the inside and the environment.

2. Medium voltage circuit-breaker according to Claim 1,
**characterized in that** the sealing ring (9) coaxially surrounds a pushrod (5) of the jackshaft arrangement.

3. Medium voltage circuit-breaker according to Claim 2,
**characterized in that** the push rod (5) consists of a synthetic insulation material.

4. Medium voltage circuit-breaker according to Claim 1,
**characterized in that** the porosity material of the sealing ring's (9) section (10) consists of a molded synthetic material, or inorganic porosity material.

5. Medium voltage circuit-breaker according to Claim 1,
**characterized in that** the sealing ring (9) is designed as a flexible rubber bellow.

6. Medium voltage circuit-breaker according to Claim 1,
**characterized in that** the enclosed main housing (2) is made of bended sheet metal in a welded design.

7. Medium voltage circuit-breaker according to one of the preceeding Claims,
**characterized in that** three single pole parts (3a - 3c) with corresponding elastomeric sealing rings (9) are attached to the mounting surface (8) of a common enclosed main housing (2) in order to form a 3-phase application.

8. Medium voltage circuit-breaker according to one of the preceeding Claims,
**characterized in that** the pair of inner electrical contacts of each pole part (3a - 3c) is arranged in a vacuum interruption chamber (4) which is embedded in insulating material.

9. Medium voltage circuit-breaker according to one of the preceeding Claims,
**characterized in that** the spring drive single or double coil permanent magnetic actuator could be used for driving the moving contacts directly of indirectly of the circuit breaker.
